# FASCICULE DE BREVET EUROPEEN

(11) **EP 1 240 042 B1**
(45) Date de publication et mention de la délivrance du brevet: **28.09.2005**
(21) Numéro de dépôt: 00979739.0
(22) Date de dépôt: 15.11.2000
(51) Int. Cl.: B60J 7/20

(54) **TOIT ESCAMOTABLE DANS LE COFFRE ARRIERE D'UN VEHICULE**
IN EINEM KRAFTFAHRZEUGKOFFERRAUM VERSENKBARES DACH
ROOF THAT CAN BE RETRACTED INTO THE TRUNK OF A VEHICLE

(30) Priorité: 20.12.1999 FR 9916083
(43) Date de publication de la demande: 18.09.2002
(73) Titulaire: France Design, 79140 Le Pin (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Geismar, Thierry
(86) Numéro de dépôt international: PCT/FR2000/003175
(87) Numéro de publication internationale: WO 2001/045976

(56) Documents cités:
- DE-A- 19 714 105
- US-A- 5 921 608

## Description

La présente invention concerne un toit escamotable dans le coffre arrière d'un véhicule afin de le convertir en cabriolet.

On connaît des véhicules équipés d'un toit escamotable dans le coffre arrière du véhicule, comprenant un élément avant relié de façon articulée à un élément arrière, ces deux éléments étant mobiles entre une position dans laquelle ceux-ci recouvrent l'habitacle du véhicule et une position dans laquelle, ils sont repliés dans le coffre arrière.

Le brevet américain US -A- 5 921 608 décrit un véhicule équipé d'un toit escamotable dans le coffre arrière. Ce véhicule comprend des clapets d'obturation latéraux disposés de part et d'autre de la plage arrière. Les clapets d'obturation latéraux peuvent pivoter vers l'intérieur du véhicule pour dégager un passage dans les parois latérales. Ce passage permet l'escamotage du toit dans le coffre arrière.

Cependant, la plage arrière de ce véhicule ne bascule pas. Ainsi, l'espace situé à l'arrière des sièges du véhicule n'est pas libéré totalement.

Un toit escamotable dans le coffre arrière d'un véhicule est également décrit dans le brevet français FR-A- 2 759 729.

Le véhicule décrit dans le brevet précité comprend entre le siège arrière de son habitacle et le bord arrière de l'élément arrière lorsque le toit est dans sa position de fermeture, une plage arrière pouvant basculer pour libérer une ouverture débouchant dans le coffre arrière pour permettre le passage des deux éléments de toit.

Cependant, cette plage arrière pivotante ne peut en aucun cas libérer les parties latérales situées de chaque côté de cette plage arrière pour permettre le passage des bras qui commandent le déplacement des deux éléments du toit vers le coffre et inversement le déplacement de ceux-ci vers la position où ils recouvrent l'habitacle.

Le but de la présente invention telle que définie dans la revendication 1 est de remédier à l'inconvénient ci-dessus.

L'invention a trait a un toit escamotable du type divulgué dans US-A-5 921 608, dans lequel au delà de chaque bord latéral de la plage arrière est prévu un obturateur pouvant pivoter suivant un axe parallèle à l'axe longitudinal du véhicule entre une position dans laquelle chaque obturateur est situé dans le prolongement de la plage arrière et une position dans laquelle chaque obturateur libère un passage vers le coffre arrière.

Les ouvertures ainsi libérées permettent le passage des bras pivotants qui commandent le déplacement des éléments du toit vers le coffre arrière et vice versa.

Selon l'invention, le toit escamotable comprend des moyens pour commander simultanément le basculement de la plage arrière suivant un axe perpendiculaire à l'axe longitudinal du véhicule et le basculement de chaque obturateur suivant un axe parallèle à l'axe longitudinal du véhicule, lesdits moyens étant agencés pour commander le basculement de la plage arrière vers l'intérieur et vers l'avant du coffre arrière et le basculement des obturateurs vers l'extérieur sous les ailes arrières du véhicule.

D'autres particularités et avantages de l'invention apparaîtront encore dans la description ci-après.

Aux dessins annexés, donnés à titre d'exemples non limitatifs:
- la figure 1 est une vue schématique en coupe longitudinale d'un véhicule équipé d'un toit escamotable dans le coffre arrière ;
- la figure 2 est une demi-vue en plan et en coupe de la partie arrière du véhicule, montrant la plage arrière et un obturateur latéral ;
- la figure 3 est une vue en coupe suivant le plan A de la figure 2, montrant une première version du mécanisme de commande du basculement d'un obturateur latéral ;
- la figure 4 est une vue partielle de l'obturateur, de la plage arrière et de leur mécanisme de commande ;
- la figure 5 est une vue analogue à la figure 3, montrant une seconde version du mécanisme de commande du basculement d'un obturateur latéral;
- la figure 6 est une vue en coupe suivant le plan B de la figure 5.

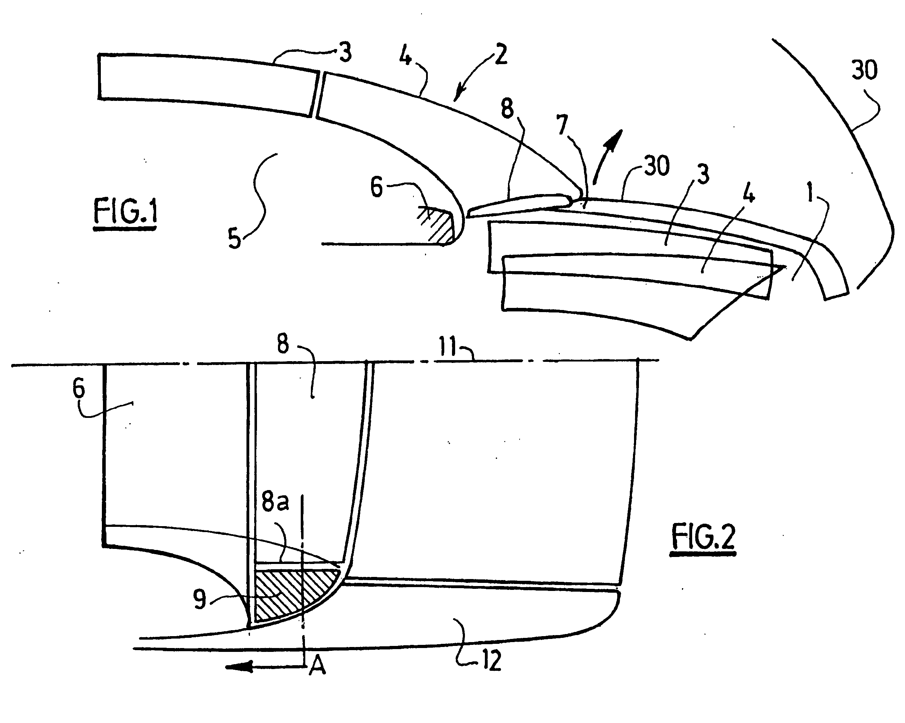

Dans la réalisation illustrée par la figure 1, le toit escamotable dans le coffre arrière 1 d'un véhicule 2, comprend un élément rigide avant 3 relié de façon articulée à un élément rigide arrière 4 qui constitue la lunette arrière.

Ces deux éléments 3, 4 sont mobiles entre une position dans laquelle ceux-ci recouvrent l'habitacle 5 du véhicule 2 et une position dans laquelle, ils sont repliés dans le coffre arrière 1.

Par ailleurs, le véhicule 2 comprend sous la lunette arrière, entre le siège arrière 6 de son habitacle 5 et le bord arrière 7 de l'élément arrière 4, une plage arrière 8 pouvant basculer pour libérer une ouverture débouchant dans le coffre arrière 1 pour permettre le passage des deux éléments de toit 3, 4.

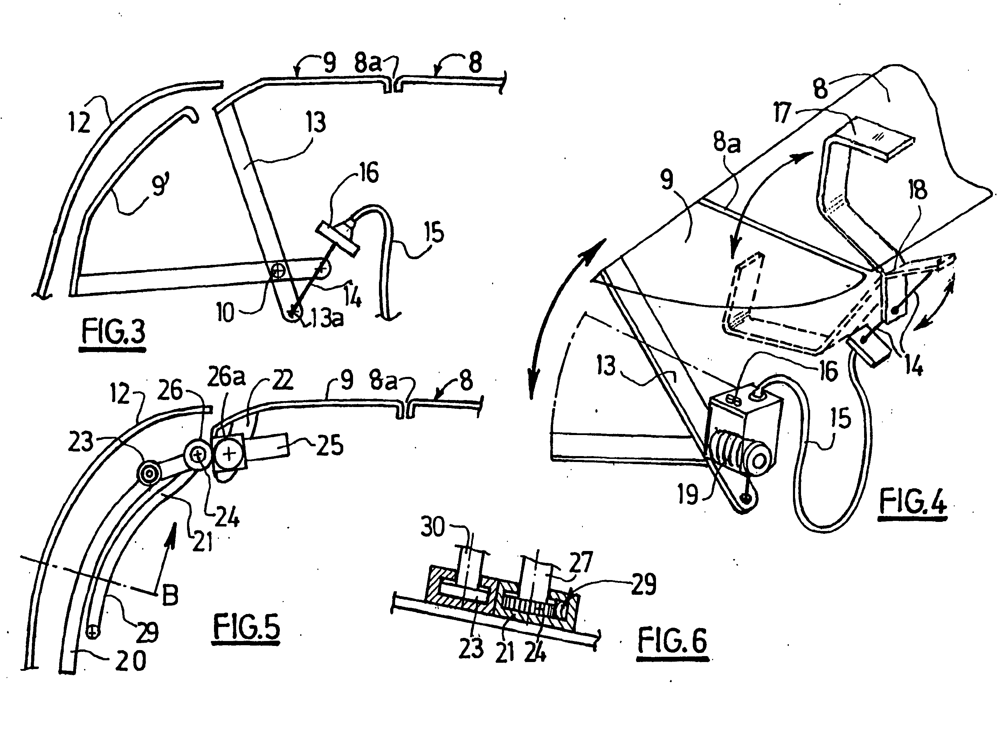

Comme montré par les figures 2,3,4 et 5, au delà de chaque bord latéral 8a de la plage arrière 8 est prévu un obturateur 9 pouvant pivoter suivant un axe 10 parallèle à l'axe longitudinal 11 du véhicule, entre une position (voir figure 3) dans laquelle chaque obturateur 9 est situé dans le prolongement de la plage arrière 8 et une position (voir 9' sur la figure 3) dans laquelle chaque obturateur 9 libère un passage vers le coffre arrière 1.

De préférence, le toit escamotable comprend des moyens pour commander simultanément le basculement de la plage arrière 8 suivant un axe 18 perpendiculaire à l'axe longitudinal 11 du véhicule 2 et le basculement de chaque obturateur 9 suivant un axe parallèle à l'axe longitudinal 11 du véhicule.

Les moyens ci-dessus sont agencés pour commander le basculement de la plage arrière 8 vers l'intérieur et vers l'avant du coffre arrière 1 et le basculement des obturateurs 9 vers l'extérieur sous les ailes arrière 12 du véhicule, comme montré par la figure 3.

Dans l'exemple de la figure 3, le basculement de chaque obturateur 9 est commandé par un bras 13 monté pivotant suivant un axe 10 parallèle à l'axe 11 du véhicule et situé sous l'obturateur 9 lorsque celui-ci est dans le prolongement de la plage arrière 8.

Dans cet exemple, les moyens pour commander le pivotement du bras 13 comprennent un câble 14 relié à l'extrémité 13a du bras 13 située au delà de son axe 10 de pivotement à l'opposé de l'obturateur 9.

Le câble 14 est engagé dans une gaine 15 retenue à un support fixe 16.

Comme montré par la figure 4, le même câble 14 est relié à l'extrémité d'un bras 17 qui commande le basculement de la plage arrière 8 autour de l'axe 18 qui est perpendiculaire à l'axe du véhicule.

Par ailleurs, un ressort de rappel 19 est prévu pour commander le basculement de la plage arrière 8 et/ou des obturateurs 9 à partir de leur position d'ouverture vers leur position de fermeture.

A titre de variante, les moyens pour commander le pivotement du bras 13 peuvent être constitués par un moteur électrique en prise sur l'axe de pivotement 10 du bras 13.

Dans la version représentée sur la figure 5, les moyens pour commander le basculement de chaque obturateur 9 comprennent deux glissières 20, 21 s'étendant sous l'aile arrière 12 et près de la surface intérieure de celle-ci.

L'obturateur 9 est porté par un bras 22 comportant deux galets 23, 24 engagés respectivement dans les deux glissières 20, 21.

Les glissières 20, 21 sont adaptées à guider le déplacement de l'obturateur 9 entre une position de fermeture et une position d'ouverture dans laquelle l'obturateur 9 est situé près de la surface intérieure de l'aile arrière 12 du véhicule.

Les moyens pour commander le déplacement de l'obturateur 9 le long des glissières 20, 21 comprennent un moteur électrique 25 fixé à l'obturateur 9.

Le moteur 25 entraîne un pignon 26 par l'intermédiaire d'un pignon 26a (ou directement en sortie réducteur).

Le pignon 26a est relié à un axe 27 (voir figure 6), coulissant dans la glissière 21 et entraînant un pignon 24 engrenant sur une crémaillère 29 s'étendant tout le long de la glissière 21.

L'autre axe 30 entraîne un galet 23 dans la glissière 20 pour guider l'obturateur 9 dans son déplacement.

On peut aussi imaginer tout autre système d'entraînement par câble ou par courroie, le moteur étant fixe et fixé au châssis sous l'aile 12.

Ce principe à coulissement à double glissière peut aussi s'appliquer à la plage arrière dans des cas où celle-ci est soumise à une cinématique particulière.

On va maintenant décrire en référence aux figures 1, 3, 4 le fonctionnement d'un dispositif selon l'invention.

Pour ouvrir le toit, on actionne une commande non représentée qui déplace les deux éléments 3, 4 vers le coffre arrière 1, après ouverture du couvercle 30 de ce dernier.

Le déplacement des éléments 3, 4 est réalisé par des bras articulés non représentés, mais connus, qui lorsque le toit est fermé sont situés latéralement en avant de la plage arrière 8.

Une commande non représentée, actionne le câble qui entraîne simultanément le pivotement du bras 13 et celui du bras 17 entraînant le basculement vers le côté, des obturateurs 9 et le basculement de la plage arrière 8 vers le coffre arrière 1.

Le basculement vers le côté des obturateurs 9 et celui de la plage arrière 8, libère une ouverture qui permet le passage des bras de commande des éléments 3, 4, et celui de ces éléments 3, 4, qui peuvent ainsi basculer dans le coffre arrière.

Lors de la fermeture du toit, les éléments 3, 4 basculent vers l'avant en passant par l'ouverture libérée par la plage arrière 8 et par les obturateurs latéraux 9.

Lorsque le toit est complètement fermé, la plage arrière 8 et les obturateurs 9 reviennent en position de fermeture.

## Revendications

1. Toit escamotable dans le coffre arrière (1) d'un véhicule (2), comprenant un élément avant (3) relié de façon articulée à un élément arrière (4), ces deux éléments étant mobiles entre une position dans laquelle ceux-ci recouvrent l'habitacle (5) du véhicule et une position dans laquelle ils sont repliés dans te coffre arrière (6), le véhicule (2) comprenant entre le siège arrière (6) de son habitacle et le bord arrière (7) de l'élément arrière (4) lorsque le toit est dans sa position de fermeture, une plage arrière (8), au-delà de chaque bord latéral (8a) de la plage arrière (8) est prévu un obturateur (9) pouvant pivoter suivant un axe (10) parallèle à l'axe longitudinal (11) du véhicule, entre une position dans laquelle chaque obturateur (9) est situé dans le prolongement de la plage arrière (8) et une position dans laquelle chaque obturateur (9) libère un passage vers le coffre arrière (1), des moyens étant en outre prévus pour commander le basculement de chaque obturateur suivant un axe (10) parallèle à l'axe longitudinal (11) du véhicule, **caractérisé en ce que** la plage arrière (8) peut basculer pour libérer une ouverture débouchant dans le coffre arrière (1) pour permettre le passage des deux éléments (3, 4), et **en ce que** lesdits moyens de commande du basculement de chaque obturateur (9) commande simultanément le basculement de la plage arrière (8) suivant un axe perpendiculaire (18) à l'axe longitudinal (11) du véhicule et le basculement de chaque obturateur (9) et sont agencés pour commander le basculement de la plage arrière (8) vers l'intérieur et vers l'avant du coffre arrière (1), le basculement des obturateurs (9) se faisant vers l'extérieur sous les ailes arrière (12) du véhicule.

2. Toit escamotable conforme à la revendication 1, **caractérisé en ce que** le basculement de chaque obturateur (9) est commandé par un bras (13) monté pivotant suivant un axe (10) parallèle à l'axe du véhicule et situé sous l'obturateur (9) lorsque celui-ci est dans le prolongement de la plage arrière (8).

3. Toit escamotable conforme à la revendication 2, **caractérisé en ce que** les moyens pour commander le pivotement du bras (13) comprennent un câble (14) relié à l'extrémité (13a) du bras (13) située au delà de son axe de pivotement (10) à l'opposé de l'obturateur (9).

4. Toit escamotable conforme à la revendication 3, **caractérisé en ce que** le même câble (14) est relié à l'extrémité d'un bras (17) qui commande le basculement de la plage arrière (8).

5. Toit escamotable conforme à l'une des revendications 3 ou 4, **caractérisé en ce qu'**un ressort de rappel (19) est prévu pour commander le basculement de la plage arrière (8) et/ou des obturateurs (9) à partir de leur position d'ouverture vers leur position de fermeture.

6. Toit escamotable conforme à la revendication 2, **caractérisé en ce que** les moyens pour commander le pivotement du bras (13) comprennent un moteur électrique en prise sur l'axe de pivotement (10) dudit bras (13).

7. Toit escamotable conforme à la revendication 1, **caractérisé en ce que** les moyens pour commander le basculement de chaque obturateur (9) comprennent deux glissières (20, 21) s'étendant sous l'aile arrière (12) et près de la surface intérieure de celle-ci, l'obturateur (9) étant porté par un bras (22) comportant deux galets (23, 24) engagés respectivement dans les deux glissières, celles-ci étant adaptées à guider le déplacement de l'obturateur (9) entre une position d'obturation et une position d'ouverture dans laquelle l'obturateur (9) est situé près de la surface intérieure de l'aile arrière (12) du véhicule.

8. Toit escamotable conforme à la revendication 7, **caractérisé en ce que** les moyens pour commander le déplacement de l'obturateur (9) le long des glissières (20, 21) comprennent un moteur électrique (25) fixé à l'obturateur ou un câble ou une courroie.

## Patentansprüche

1. Einklappbares Dach im Kofferraum (1) eines Fahrzeugs (2), mit einem vorderen Element (3), das gelenkig mit einem hinteren Element (4) verbunden ist, wobei diese beiden Elemente beweglich sind zwischen einer Position, in der sie den Innenraum (5) des Fahrzeugs überdecken, und einer Position, in der sie im Kofferraum (6) gefaltet sind, das Fahrzeug (2) zwischen dem Rücksitz (6) seines Innenraums und dem hinteren Rand (7) des hinteren Elements (4) bei geschlossenem Dach eine Heckablage (8) aufweist, über jeden Seitenrand (8a) der Heckablage (8) hinausgehend ein Verschluss (9) vorgesehen ist, der gemäß einer zur Längsachse (11) des Fahrzeugs parallelen Achse (10) schwenkbar ist zwischen einer Position, in der sich jeder Verschluss (9) in der Verlängerung der Heckablage (8) befindet, und einer Position, in der jeder Verschluss (9) eine Passage zum Kofferraum (1) freigibt, ferner Mittel vorgesehen sind, um das Schwenken jedes Verschlusses gemäß einer zur Längsachse (11) des Fahrzeugs parallelen Achse (10) zu steuern, **dadurch gekennzeichnet, dass** die Heckablage (8) schwenkbar ist, um eine in den Kofferraum (1) mündende Öffnung freizugeben, um die Passage der beiden Elemente (3, 4) zu ermöglichen, und die besagten Steuermittel des Schwenkens jedes Verschlusses (9) gleichzeitig das Schwenken der Heckablage (8) gemäß einer zur Längsachse (11) des Fahrzeugs senkrechten Achse (18) und das Schwenken jedes Verschlusses (9) steuern, und vorgesehen sind, um das Schwenken der Heckablage (8) nach innen und nach vorne des Kofferraums (1) zu steuern, wobei das Schwenken der Verschlüsse (9) nach außen unter die Heckflügel (12) des Fahrzeugs erfolgt.

2. Einklappbares Dach gemäß Anspruch 1, **dadurch gekennzeichnet, dass** das Schwenken jedes Verschlusses (9) von einem Arm (13) gesteuert wird, der schwenkbar gemäß einer zur Fahrzeugachse parallelen Achse (10) montiert ist und sich unter dem Verschluss (9) befindet, wenn dieser in der Verlängerung der Heckablage (8) liegt.

3. Einklappbares Dach gemäß Anspruch 2, **dadurch gekennzeichnet, dass** die Steuermittel des Schwenkens des Arms (13) ein Seil (14) umfassen, das mit dem Ende (13a) des Arms (13) verbunden ist, das sich auf der anderen Seite seiner Schwenkachse (10) gegenüber dem Verschluss (9) befindet.

4. Einklappbares Dach gemäß Anspruch 3, **dadurch gekennzeichnet, dass** dasselbe Seil (14) mit dem Ende eines Arms (17) verbunden ist, der das Schwenken der Heckablage (8) steuert.

5. Einklappbares Dach gemäß einem der Ansprüche 3 oder 4, **dadurch gekennzeichnet, dass** eine Rückstellfeder (19) vorgesehen ist, um das Schwenken der Heckablage (8) und/oder der Verschlüsse (9) aus ihrer geöffneten Position in ihre geschlossene Position zu steuern.

6. Einklappbares Dach gemäß Anspruch 2, **dadurch gekennzeichnet, dass** die Steuermittel des Schwenkens des Arms (13) einen Elektromotor umfassen, der an der Schwenkachse (10) des besagten Arms (13) angreift.

7. Einklappbares Dach gemäß Anspruch 1, **dadurch gekennzeichnet, dass** die Steuermittel des Schwenkens jedes Verschlusses (9) zwei Gleitschienen (20, 21) umfassen, die sich unter dem Heckflügel (12) und in der Nähe der Innenfläche desselben erstrecken, wobei der Verschluss (9) von einem Arm (22) getragen wird, der zwei Rollen (23, 24) umfasst, die jeweils in die beiden Gleitschienen eingeführt sind, wobei diese geeignet sind, das Verschieben des Verschlusses (9) zu führen zwischen einer Verschlussposition und einer Öffnungsposition, in der sich der Verschluss (9) in der Nähe der Innenfläche des Heckflügels (12) des Fahrzeugs befindet.

8. Einklappbares Dach gemäß Anspruch 7, **dadurch gekennzeichnet, dass** die Steuermittel der Verschiebung des Verschlusses (9) entlang den Gleitschienen (20, 21) einen am Verschluss befestigten Elektromotor (25) oder ein Seil oder einen Riemen umfassen.

## Claims

1. A retractable roof that is retractable into the rear trunk (1) of a vehicle (2), which roof comprises a front element (3) connected in hinged manner to a rear element (4), said elements being mounted to move between a position in which they cover the passenger compartment (5) of the vehicle, and a position in which they are folded away into the rear trunk (6), the vehicle (2) having a back shelf (8) between the back seat (6) of its passenger compartment and the rear edge (7) of the rear element (4) when the roof is in its closed position, a closure piece (9) being provided beyond each side edge (8a) of the back shelf (8), which closure piece is mounted to pivot about an axis (10) parallel to the longitudinal axis (11) of the vehicle to go between a position in which each closure piece (9) is situated in alignment with the back shelf (8) and a position in which each closure piece (9) uncovers a passageway towards the rear trunk (1), control means further being provided for causing each closure piece to pivot about an axis (10) parallel to the longitudinal axis (11) of the vehicle, said retractable roof being **characterized in that** the back shelf (8) is mounted to pivot to uncover an opening into the rear trunk (1) for enabling the two elements (3, 4) to pass through, and **in that** said control means, for causing each closure piece (9) to pivot, simultaneously cause the back shelf (8) to pivot about an axis (18) perpendicular to the longitudinal axis (11) of the vehicle and cause each closure piece (9) to pivot, and said control means are arranged to cause the back shelf (8) to pivot towards the inside and towards the front of the rear trunk (1), the closure pieces (9) pivoting outwards under the rear fenders (12) of the vehicle.

2. A retractable roof according to claim 1, **characterized in that** each closure piece (9) is controlled by an arm (13) mounted to pivot about an axis (10) parallel to the axis of the vehicle and situated under the closure piece (9) when said closure piece is situated in alignment with the back shelf (8).

3. A retractable roof according to claim 2, **characterized in that** the means for causing the arm (13) to pivot comprise a cable (14) connected to that end (13a) of the arm (13) which is situated beyond its pivot axis (10) opposite from the closure piece (9).

4. A retractable roof according to claim 3, **characterized in that** the same cable (14) is connected to the end of an arm (17) which causes the back shelf (8) to pivot.

5. A retractable roof according to claim 3 or claim 4, **characterized in that** a return spring (19) is provided to cause the back shelf (8) and/or the closure pieces (9) to pivot from its/their open position(s) to its/their closed position(s).

6. A retractable roof according to claim 2, **characterized in that** the control means for causing the arm (13) to pivot comprise an electric motor engaged on the pivot pin forming the pivot axis (10) of said arm (13).

7. A retractable roof according to claim 1, **characterized in that** the means for causing each closure piece (9) to pivot comprise two rails (20, 21) extending under the rear fender (12) and close to the inside surface thereof, the closure piece (9) being carried by an arm (22) having two wheels (23, 24) engaged in respective ones of the rails, each rail being adapted to guide the corresponding closure piece (9) as it moves between a closure position and an open position in which the closure piece (9) is situated close to the inside surface of the rear fender (12) of the vehicle.

8. A retractable roof according to claim 7, **characterized in that** the control means for causing the closure piece (9) to move along the rails (20, 21) comprise an electric motor (25) fastened to the closure piece, or a cable, or a belt.
